**Europäisches Patentamt**

**European Patent Office**

**Office européen des brevets**

(19)

(11) **EP 1 282 078 A1**

## (12) DEMANDE DE BREVET EUROPEEN

(43) Date de publication:
**05.02.2003 Bulletin 2003/06**

(51) Int Cl.⁷: **G06T 15/20**

(21) Numéro de dépôt: **02078081.3**

(22) Date de dépôt: **26.07.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **02.08.2001 FR 0110372**

(71) Demandeur: **Koninklijke Philips Electronics N.V.**
**5621 BA Eindhoven (NL)**

(72) Inventeurs:
• **Talayssat, Jacky**
**75008 Paris (FR)**
• **Gobert, Jean**
**75008 Paris (FR)**

(74) Mandataire: **Chaffraix, Jean**
**Société Civile S.P.I.D.**
**156, Boulevard Haussmann**
**75008 Paris (FR)**

(54) **Dispositif de traitement graphique d'objet vidéo**

(57) La présente invention concerne un dispositif de traitement graphique d'objets vidéo comportant des données de texture, ledit dispositif comprenant un circuit de filtrage (11) pour sous-échantillonner un objet vidéo, et une unité de composition d'objets vidéo (13) pour appliquer des données de texture de l'objet vidéo à une forme graphique via une transformation géométrique. L'unité de composition d'objets vidéo calcule un facteur de sous-échantillonnage à partir de paramètres de la transformation géométrique, ledit facteur de sous-échantillonnage étant ensuite utilisé par le circuit de filtrage pour sous-échantillonner l'objet vidéo. L'unité de composition d'objets vidéo applique alors l'objet vidéo sous-échantillonné à la forme graphique en vue de l'affichage à l'écran d'une scène visuelle.

FIG.2

EP 1 282 078 A1

## Description

### Domaine technique de l'invention

La présente invention concerne un dispositif de traitement graphique d'objets vidéo comportant des données de texture, ledit dispositif comprenant un circuit de filtrage apte à sous-échantillonner les objets vidéo, et une unité de composition d'objets vidéo apte à appliquer des données de texture à une forme graphique via une transformation géométrique.

Elle trouve son application dans les appareils numériques destinés à faire de la composition d'objets vidéo comme par exemples, les décodeurs vidéo, les accélérateurs graphiques 3D, les consoles de jeux vidéo, les assistants personnels numériques ou encore les téléphones mobiles.

### Etat de la technique antérieure

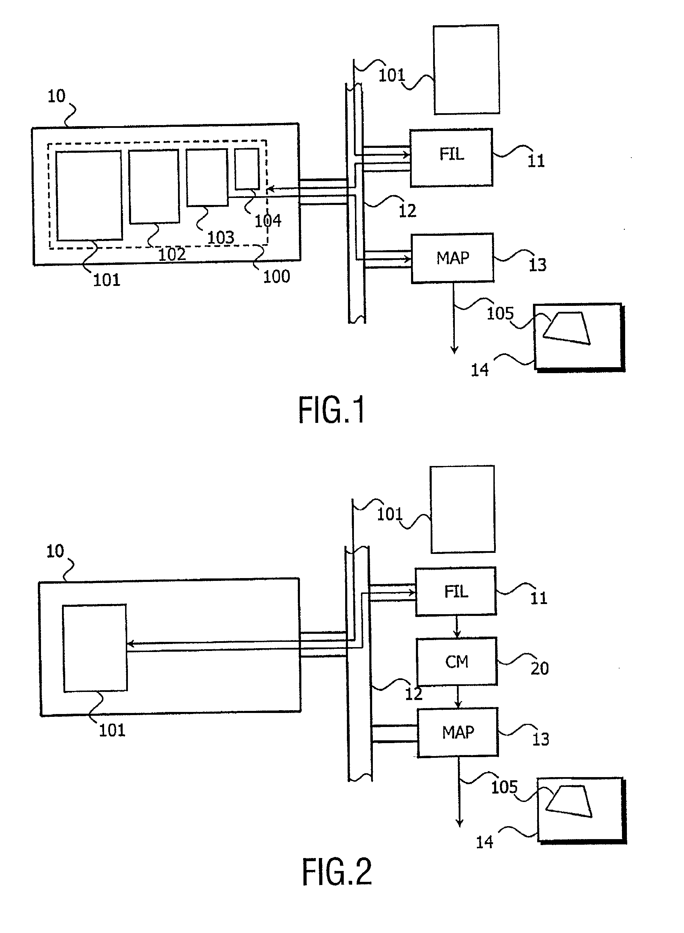

Des accélérateurs graphiques permettant de traiter des objets vidéo comprenant des données de texture sont connus du document intitulé « Computer Graphics : Principles and practice », par Foley et al., 1990. Le principe de fonctionnement desdits accélérateurs graphiques est décrit plus particulièrement p. 815-835 de cet ouvrage et est illustré à la Fig. 1. L'accélérateur graphique comporte généralement un circuit de filtrage FIL (11) utilisant le concept de « MIP maps » pour sous-échantillonner un objet vidéo à une résolution d'origine (101) selon différents niveaux. L'objet vidéo à la résolution d'origine est un ensemble à deux dimensions x et y de pixels. Un objet vidéo de premier niveau de résolution correspond ainsi à un sous-échantillonnage spatial de l'objet vidéo à la résolution d'origine avec une résolution divisée par deux selon chacune des directions x et y, et contient de ce fait le quart des pixels de l'objet vidéo à la résolution d'origine. L'opération est itérée à chaque niveau, de telle sorte qu'un objet vidéo de niveau de résolution courant k possède une résolution divisée par deux selon chacune des directions x et y par rapport à l'objet vidéo de niveau de résolution immédiatement supérieur k-1. On obtient ainsi un ensemble (100) de versions (101 à 104) de l'objet vidéo, appelé MIP-maps en anglais, chaque version ayant une résolution différente. Cet ensemble de versions de l'objet vidéo est stocké dans une mémoire (10) via un bus système (12).

L'accélérateur graphique de l'état de la technique antérieure comprend également une unité de composition d'objets vidéo (13) en vue de l'affichage d'une scène visuelle sur un écran (14), les données de texture d'un objet vidéo étant destinées à s'inscrire à l'intérieur d'une forme graphique (105), un polygone par exemple. L'unité de composition d'objets vidéo a pour fonction de convertir l'objet vidéo afin de l'ajuster aux dimensions de la forme graphique grâce à une transformation géométrique. Pour cela, elle détermine dans l'ensemble de versions de l'objet vidéo une ou deux versions de l'objet vidéo dont le ou les niveaux de résolution sont les plus proches de la résolution de l'écran sur lequel doit s'afficher l'objet vidéo à l'intérieur de la forme graphique. L'unité de composition d'objets vidéo effectue alors des interpolations bilinéaires à partir de 4 pixels d'un objet vidéo de niveau de résolution prédéterminé ou des interpolations trilinéaires, c'est à dire des interpolations linéaires entre deux interpolations bilinéaires sur deux objets vidéo de niveaux de résolution différents.

Un tel accélérateur graphique permet ainsi de générer à l'avance un ensemble de versions d'un objet vidéo, une version de l'objet vidéo à sa résolution d'origine et des versions de l'objet vidéo sous-échantillonné selon différents niveaux de résolution, lesdites versions de l'objet vidéo étant stockées statiquement en mémoire afin d'être utilisées par la suite par l'unité de composition d'objets vidéo. Cependant, si cet accélérateur graphique est utilisable avec des textures naturelles simples, il ne permet pas d'exécuter en temps réel une application utilisant des objets vidéo contenant des données de texture complexes qui sont de surcroît renouvelées périodiquement, typiquement tous les 1/25ème ou 1/30ème de seconde. Avec de telles données de texture, un sous-échantillonnage de l'objet vidéo selon différents niveaux de résolution serait très coûteux en terme de bande passante du fait des nombreux échanges qu'il nécessiterait entre les différents circuits, via le bus système.

### Exposé de l'invention

La présente invention a pour but de proposer un dispositif de traitement graphique de données de texture permettant de traiter des données de texture complexes en temps réel.

A cet effet, le dispositif de traitement graphique est remarquable en ce que l'unité de composition d'objets vidéo est apte à calculer un facteur de sous-échantillonnage à partir de paramètres de la transformation géométrique, le circuit de filtrage est apte à sous-échantillonner l'objet vidéo selon le facteur de sous-échantillonnage, et l'unité de composition d'objets vidéo est apte à appliquer l'objet vidéo ainsi sous-échantillonné à la forme graphique.

Un tel accélérateur graphique permet ainsi de composer une scène visuelle à partir d'un objet vidéo sous-échantillonné à la demande et non pas, comme il est décrit dans l'état de la technique antérieure, à partir d'un ensemble de versions d'un objet vidéo sous-échantillonné selon différents niveaux de résolution. L'utilisation de la bande passante s'en trouve optimisée.

### Brève description des dessins

Ces aspects de l'invention ainsi que d'autres aspects plus détaillés apparaîtront plus clairement grâce à la description suivante d'un mode de réalisation de l'invention, donné à titre d'exemple non limitatif et en regard des dessins annexés parmi lesquels :

- la Fig. 1 illustre le principe de fonctionnement d'un accélérateur graphique permettant de traiter des objets vidéo selon l'état de la technique antérieure, et
- la Fig. 2 illustre le principe de fonctionnement d'un accélérateur graphique permettant de traiter des objets vidéo selon l'invention.

## Exposé détaillé d'au moins un mode de réalisation de l'invention

La présente invention a été développée dans le cadre d'un accélérateur graphique permettant d'afficher des objets vidéo provenant d'une séquence d'images codées selon la norme MPEG-4. Elle s'applique à tout dispositif de traitement graphique d'objets vidéo comportant des données de texture.

La Fig. 2 illustre le principe de fonctionnement d'un accélérateur graphique selon l'invention. L'accélérateur graphique comprend une mémoire (10) qui permet de stocker un objet vidéo à une résolution d'origine. Il comporte également un circuit de filtrage (11) qui, à la différence de l'état de la technique antérieure, ne va pas générer a priori l'ensemble de versions de l'objet vidéo. L'accélérateur graphique comprend enfin une unité de composition d'objets vidéo (13) apte à appliquer des données de texture de l'objet vidéo à une forme graphique via une transformation géométrique. Dans le but d'inscrire l'objet vidéo dans la forme graphique, l'accélérateur graphique est apte à réaliser les opérations suivantes :

- L'unité de composition d'objets vidéo calcule tout d'abord un facteur de sous-échantillonnage à partir de paramètres de la transformation géométrique. Par exemple, si la transformation géométrique est un zoom, les coordonnées (U,V) de l'objet vidéo sous-échantillonné sont déterminées à partir des coordonnées (u,v) de l'objet vidéo à sa résolution d'origine selon le système suivant d'équations :

$$\begin{cases} U = au + bv + c \\ V = du + ev + f \end{cases}$$

où a, b, c, d, e et f sont des constantes. Si a=1/5, e=1/4 et b=c=d=f=0, le facteur de sous-échantillonnage est de 5 selon la direction horizontale et de 4 selon la direction verticale. Dans l'exemple donné ci-dessus, le zoom est fixe pour des raisons de simplicité de l'exposé mais il apparaîtra à l'homme du métier que la transformation géométrique est plus généralement une perspective, où le facteur de zoom local est variable.

- Le circuit de filtrage est apte à recevoir l'objet vidéo à sa résolution d'origine via un bus système (12), et à sous-échantillonner ledit objet vidéo selon le facteur de sous-échantillonnage calculé précédemment. Pour cela, le circuit de filtrage utilise, par exemple, un filtre linéaire dont les coefficients sont déterminés par le facteur de zoom local. Dans le mode de réalisation préféré, le circuit de filtrage est apte à fournir un objet vidéo sous-échantillonné à une mémoire intermédiaire CM (20).
- La mémoire intermédiaire est apte à stocker temporairement l'objet vidéo sous-échantillonné. La mémoire intermédiaire est, par exemple, une mémoire cache. Une telle mémoire cache permet de diminuer la complexité du dispositif de traitement graphique ainsi que la bande passante, les pixels sous-échantillonnés étant lus à de multiples reprises par l'unité de composition d'objets vidéo pour le filtrage final d'interpolation. Elle permet en outre un fonctionnement en mode pipeline, l'unité de composition d'objets vidéo utilisant un objet vidéo sous-échantillonné courant, tandis que le circuit de filtrage prépare la version sous-échantillonnée du prochain objet vidéo. Selon un autre mode de réalisation, le dispositif de traitement graphique ne comporte pas de mémoire intermédiaire et le sous-échantillonnage s'effectue à la volée au fur et à mesure des besoins de l'unité de composition d'objets vidéo.
- L'unité de composition d'objets vidéo est apte à appliquer l'objet vidéo sous-échantillonné à la forme graphique lors de la composition d'une scène visuelle.

Ainsi, l'objet vidéo sous-échantillonné n'est produit qu'à la demande et les données transitant sur le bus système sont minimisées, diminuant de ce fait la bande passante par rapport à l'état de la technique antérieure.

La Fig. 2 illustre l'invention plus qu'elle ne la limite. Il existe de nombreuses manières rentrant dans le cadre de la présente invention pour implémenter les fonctions décrites ci-dessus aux moyens de circuits et de bus. Par exemple, la mémoire intermédiaire (20) peut être reliée directement au bus. Elle ne nécessite alors plus une interface dédiée entre le circuit de filtrage (11) d'une part, et l'unité de composition d'objets vidéo (13) d'autre part.

Le dispositif de traitement graphique peut être tout type d'appareils numériques destinés à faire de la composition d'objets vidéo comme par exemples, un décodeur vidéo, un accélérateur graphique 3D, une console de jeux vidéo, un assistant personnel numérique ou encore un téléphone mobile.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

**Revendications**

1. Dispositif de traitement graphique d'objets vidéo comportant des données de texture, ledit dispositif comprenant :

   - un circuit de filtrage (11) apte à sous-échantillonner un objet vidéo, et
   - une unité de composition d'objets vidéo (13) apte à appliquer des données de texture de l'objet vidéo à une forme graphique via une transformation géométrique, ledit dispositif étant **caractérisé en ce que** :

   - l'unité de composition d'objets vidéo est apte à calculer un facteur de sous-échantillonnage à partir de paramètres de la transformation géométrique,
   - le circuit de filtrage est apte à sous-échantillonner l'objet vidéo selon le facteur de sous-échantillonnage, et
   - l'unité de composition d'objets vidéo est apte à appliquer l'objet vidéo sous-échantillonné à la forme graphique.

2. Dispositif de traitement graphique d'objets vidéo selon la revendication 1, **caractérisé en ce qu'**il comprend en outre une mémoire intermédiaire (20) apte à stocker temporairement l'objet vidéo sous-échantillonné issu du circuit de filtrage (11) et à fournir ledit objet vidéo sous-échantillonné à l'unité de composition d'objets vidéo (13).

FIG.1

FIG.2

**EP 1 282 078 A1**

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | HECKBERT P S: "SURVEY OF TEXTURE MAPPING" IEEE COMPUTER GRAPHICS AND APPLICATIONS, IEEE INC. NEW YORK, US, vol. 6, no. 11, 1 novembre 1986 (1986-11-01), pages 56-67, XP000002233 ISSN: 0272-1716 * le document en entier * | 1,2 | G06T15/20 |

**DOMAINES TECHNIQUES RECHERCHES (Int.Cl.7)**

G06T

Le présent rapport a été établi pour toutes les revendications

| Lieu de la recherche | Date d'achèvement de la recherche | Examinateur |
|---|---|---|
| BERLIN | 11 novembre 2002 | Burgaud, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)